Europäisches Patentamt

European Patent Office

Office européen des brevets

(19)

(11) **EP 0 994 167 B1**

## (12) EUROPÄISCHE PATENTSCHRIFT

(45) Veröffentlichungstag und Bekanntmachung des Hinweises auf die Patenterteilung:
**26.11.2003 Patentblatt 2003/48**

(51) Int Cl.7: **C09J 7/02**

(21) Anmeldenummer: **99118875.6**

(22) Anmeldetag: **24.09.1999**

(54) **Elektronenstrahlvernetzung und UV-Vernetzung von doppelseitig beschichteten Klebebändern**

Crosslinking of double-sided adhesive tapes using electron beams or UV-radiation

Réticulation de rubans adhésifs double-face à l'aide de faisceaux d'électrons ou de rayons UV

(84) Benannte Vertragsstaaten:
**DE ES FR GB IT**

(30) Priorität: **12.10.1998 DE 19846902**

(43) Veröffentlichungstag der Anmeldung:
**19.04.2000 Patentblatt 2000/16**

(73) Patentinhaber: **Tesa AG**
**20253 Hamburg (DE)**

(72) Erfinder:
• **Neuhaus-Steinmetz, Hermann**
**22926 Ahrensburg (DE)**
• **Harder, Christian, Dr.**
**22589 Hamburg (DE)**
• **Klose, Maren**
**21218 Seevetal (DE)**

• **Thalacker, Dietlind**
**22453 Hamburg (DE)**
• **Karmann, Werner, Dr.**
**22147 Hamburg (DE)**

(56) Entgegenhaltungen:
**EP-A- 0 453 254      EP-A- 0 628 616**

• **PATENT ABSTRACTS OF JAPAN vol. 008, no. 150 (C-233), 12. Juli 1984 (1984-07-12) & JP 59 056471 A (NITTO DENKI KOGYO KK), 31. März 1984 (1984-03-31)**
• **PATENT ABSTRACTS OF JAPAN vol. 1995, no. 02, 31. März 1995 (1995-03-31) & JP 06 306336 A (SEKISUI CHEM CO LTD), 1. November 1994 (1994-11-01)**

**Beschreibung**

Die Erfindung betrifft die Elektronenstrahlvernetzung (ES-Vernetzung) und auch UV-Vernetzung von Masseschichten sowie Produkte, die mit diesen Masseschichten hergestellt werden.

Seit langem ist bekannt, daß insbesondere bei Acrylathaftklebemassen zur Erzeugung herausragender Klebeigenschaften eine Vernetzung erforderlich ist. Auch bei Kautschuken wird hierdurch eine Verbesserung der Klebeigenschaften erreicht.

Bei der Herstellung von Klebebändern weist die Anwendung der strahlenchemischen Vernetzung durch UV-Strahlung oder Elektronenstrahlung (ES) besondere Vorteile gegenüber den chemisch/thermischen Vernetzungsverfahren auf. Die strahlenchemische Vernetzung wird vorteilhafterweise auch zur Herstellung von doppelseitigen Klebebändern eingesetzt.

Die Tiefenverteilung der absorbierten Strahlendosis in einem mit beschleunigten Elektronen bestrahlten Produkt ist für jede gegebene Beschleunigungsspannung bekannt. Von verschiedenen Autoren sind hierfür empirische Funktionen entwickelt worden (zum Beispiel Heger, beta-gamma 1, 20, 1990; Neuhaus-Steinmetz, RadTech Europe, Mediterraneo 1993).

Reicht aufgrund des hohen Flächengewichtes eines Produktes die maximale Beschleunigungsspannung der Elektronenstrahlanlage für eine genügend gleichmäßige Durchstrahlung nicht aus, so wird in der Literatur und in Firmenbroschüren die Möglichkeit der Bestrahlung von beiden Seiten beschrieben, wobei für beide Seiten die gleiche Beschleunigungsspannung und Strahlendosis eingestellt werden.

Für Produkte, die aus einer zu vernetzenden Beschichtung, welche zum Beispiel ein Haftkleber sein kann, und einem strahlendegradierbaren Träger bestehen, wie zum Beispiel Papier, Zellulosegewebe oder -vlies und OPP-Folien, kann durch Optimierung der Beschleunigungsspannung die Schädigung minimiert werden. Hierbei erhält der Träger eine deutlich geringere mittlere Dosis als die Beschichtung, während der Dosisabfall in der Beschichtung noch in zulässigen Grenzen liegt.

Derartige Zusammenhänge sind u.a. in der EP.0 453 254 B (Yarosso u.a.) sowie in der Vortragsmitschrift eines von Dr. Karmann auf dem 7. Münchener Klebstoff- und Veredlungsseminar, 1982, gehaltenen Vortrags beschrieben.

Ein doppelseitiges Klebeband, bestehend aus einem Träger mit den zu vernetzenden Klebmassen auf beiden Seiten und einem antiadhäsiv ausgerüsteten Releaseliner, sollte bei einseitiger gleichmäßiger Durchstrahlung mit beschleunigten Elektronen nur eine Dosis von maximal ca. 10 bis 50 kGy erhalten, anderenfalls muß der Releaseliner wegen der unzulässigen Schädigung der mechanischen und antiadhäsiven Eigenschaften ausgetauscht werden. Die maximal zulässige absorbierte Strahlendosis ist vom Typ des Haftklebers und der Releasebeschichtungen abhängig.

Eine Minderung der unerwünschten Effekte ist auch hier bei geeigneten Schichtdicken durch eine geschickte Wahl der Beschleunigungsspannung zu erreichen, wenn die Strahlendosis im Releaseliner bereits deutlich abgefallen ist. Allerdings ist dabei zu beachten, daß die dem Releaseliner zugewandte Haftklebeschicht noch eine zur Vernetzung ausreichende Strahlendosis erhalten muß.

Bei der symmetrischen Bestrahlung beider Seiten eines doppelseitigen Klebebandes aus einem Träger mit Haftklebmassen auf beiden Seiten und einem antiadhäsiv ausgerüsteten Releaseliner erhält dieser die volle Strahlendosis. Das gilt auch für sogenannte Transfertapes, bei denen der zu vernetzende Haftkleber ohne weiteren Träger auf einen Releaseliner beschichtet wird.

Aus den obigen Ausführungen wird deutlich, daß der erforderliche Aufwand für die Vernetzung von doppelseitigen Klebebändern mit Elektronenstrahlen dann erheblich wird, wenn die zur Vernetzung der Haftklebeschicht benötigten Strahlendosen so hoch liegen, daß die mechanischen und antiadhäsiven Eigenschaften des Releaseliners unzulässig stark geschädigt werden, da dann der Releaseliner durch Umdecken gegen einen neuen unbelasteten ausgetauscht werden muß.

Aufgabe der Erfindung ist es, eine vorteilhafte Fertigung von doppelseitigen Klebebändern beziehungsweise allgemein doppelseitig beschichteten Trägermaterialien bei strahlenchemischer Vernetzung mit beschleunigten Elektronen oder UV-Strahlung zu ermöglichen.

Gelöst wird diese Aufgabe durch ein Verfahren, wie es im Hauptanspruch niedergelegt ist. Die Unteransprüche beschreiben vorteilhafte Ausführungsformen des Verfahrens sowie eine zweite Ausführungsform des Verfahrens.

Demgemäß betrifft die Erfindung ein Verfahren zur strahlenchemischen Vernetzung von doppelseitigen Klebebändern, wobei ein beidseitig mit Klebern beschichtetes Trägermaterial in einer Bestrahlungsvorrichtung von beiden Seiten mit unterschiedlichen Dosen asymmetrisch bestrahlt wird.

In einer vorteilhaften Ausführungsform besteht das Verfahren zur strahlenchemischen Vernetzung von doppelseitigen Klebebändern aus den Verfahrensschritten:

a) Beschichten eines Trägermaterials mit einem Kleber A,
b) ES-Vernetzung des Teilproduktes Kleber A/Träger auf der Masseseite mit einer an der ES-Anlage eingestellten Dosis A und Beschleunigungsspannung A,

c) Eindecken des Klebers A mit einem Releaseliner,

d) Beschichten der zweiten Seite des Trägermaterials mit dem Kleber B und

e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird und wobei die Dosis A und die Dosis B und/oder die Beschleunigungsspannung A und die Beschleunigungsspannung B unterschiedliche Werte aufweisen.

Es ist kein Austausch des Releaseliners und kein Umdeckvorgang notwendig. Die Verfahrensschritte können in einem Durchgang ausgeführt werden. Wenn es für erforderlich erachtet wird, kann auch eine inline-Vorbehandlung und eine zusätzliche Egalisierung des Trägers erfolgen, d.h., eine Glättung des Trägers mittels Erwärmung aufgrund der schlechten Planlage des Trägers (Verspannungen beispielsweise).

Dazu wird zunächst im Falle der ES-Vernetzung die an der ES-Anlage einzustellende Beschleunigungsspannung und Dosis für die zweite Bestrahlung abhängig von den Einzeldicken der Verbundschichten, bei Gesamtdosen bis 80 kGy und mehr in den Masseschichten, vorzugsweise mit Hilfe eines Computerprogramms so berechnet, daß die

a) Dosis auf der offenen Seite des Releaseliners kleiner 40 kGy, vorzugsweise kleiner 10 kGy, bleibt,

b) Dosis in der Grenzschicht Releaseliner/Klebmasse A kleiner 50 kGy, vorzugsweise kleiner 15 kGy, bleibt,

c) Oberflächendosis in der Klebmasse B kleiner (Solldosis + 25 %), vorzugsweise kleiner (Solldosis + 15 %), bleibt und

d) Dosis in der Grenzschicht Träger/Klebmasse B größer (Solldosis - 25 %), vorzugsweise größer (Solldosis - 15 %), bleibt,

e) während andererseits der Dosisabfall in der Klebmasse B zum Träger hin 45 %, vorzugsweise 25 %, der Solldosis nicht übersteigt.

Die Solldosis beschreibt die von der Klebemasse absorbierte Strahlendosis, bei der optimale Produkteigenschaften erreicht werden.

Die Beschleunigungsspannung und die Strahlendosis für die erste Bestrahlung werden dann so berechnet (zum Beispiel mit Approximation nach Gauß-Newton), daß die Gesamtstrahlendosis in der Klebmasseschicht A weniger als 30 %, vorzugsweise weniger als 10 %, vom gewünschten Sollwert abweicht, wobei dieser einen anderen Wert als der Sollwert der Klebmasse B haben kann.

Als Grundlage der Berechnung wird zum Beispiel folgende empirische Formel verwendet, die von Neuhaus-Steinmetz auf der RadTech Europe, Mediterraneo 1993, veröffentlicht worden ist.

$$D[\%] = \frac{\exp\left\{-\left(\frac{18,8 * X}{(U_B)^{1,57}} - 0,7\right)^2\right\}}{1 + \left(\frac{9,7 * X}{(U_B)^{1,57}}\right)^{15}}$$

mit

D        Dosis in %

$U_B$       Beschleunigungsspannung in kV

X        durchstrahltes Flächengewicht in $g/m^2$, bestehend aus den Flächengewichten des Vakuumfensters, des Luftspaltes zwischen Vakuumfenster und Produkt und der Tiefe im Produkt

Die asymmetrische zweiseitige Bestrahlung ermöglicht eine definierte und ausreichend gleichmäßige Strahlendosis in beiden Klebeschichten bei stark verringerter Strahlendosis im Releaseliner. Dadurch entfallen aufwendige und fehlerträchtige Umdeckvorgänge. Außerdem erlaubt das Verfahren auch einen gezielt unterschiedlichen Vernetzungsgrad der Klebmassen auf beiden Seiten des Klebebandes.

Auch gezielte Vernetzungsprofile über die Tiefe der Klebmassenschichten sind einstellbar. Bei der ersten und zweiten Bestrahlung werden dazu die Beschleunigungsspannungen und die Einstelldosen vorzugsweise so gewählt, daß sich in der Klebmasse A ein fallendes oder steigendes Tiefendosisprofil zum Träger hin ausbildet, mit dem Klebeeigenschaften gezielt beeinflußt werden.

Die resultierenden Strahlendosen können weiterhin vorzugsweise in den Klebemassen bis zu 80 kGy und mehr betragen, und die ES-Beschleunigungsspannungen können von 40 bis 350 kV gewählt werden. Das von der Auslegung eines Elektronenstrahlbeschleunigers abhängige Flächengewicht im Strahlengang bis zum Produkt, bestehend aus den Flächengewichten des Vakuumfensters und des Luftspaltes zum Produkt, kann typischerweise zwischen 20 und 250 g/m$^2$ betragen.

Als Klebmassen können Acrylate und Kautschuke aus Lösung oder aus Dispersion eingesetzt werden, oder es können Hotmelt-Klebemassen Verwendung finden, wobei die Klebmassen A und B auch verschieden sein können. Die Klebmassen können weiterhin gefüllt, gefärbt und/oder geschäumt sein.

Als Trägermaterialien werden insbesondere solche aus MOPP, BOPP, HDPE, LDPE, Polyester, PVC, Papier, Vliese oder Schäume eingesetzt.

Schließlich kann das Verfahren allgemein zur strahlenchemischen Vernetzung von doppelseitig beschichteten Trägermaterialien eingesetzt werden, wobei ein beidseitig beschichtetes Trägermaterial in einer Bestrahlungsvorrichtung von beiden Seiten mit unterschiedlichen Dosen asymmetrisch bestrahlt wird.

Bei den Beschichtungen handelt es sich in diesem Falle nicht um Klebmassen.

In einer ersten alternativen bevorzugten Ausführungsform besteht das Verfahren zur strahlenchemischen Vernetzung von doppelseitigen Klebebändern aus den Verfahrensschritten:

a) Beschichten eines Trägermaterials mit einem Kleber A,
b) ES-Vernetzung des Teilproduktes Kleber A/Träger auf der Masseseite mit einer Einstelldosis A und die Beschleunigungsspannung A, wobei der Kleber A sowohl UV- wie ES-vernetzbar sein kann,
c) Eindecken des Klebers A mit einem Releaseliner,
d) Beschichten der zweiten Seite des Trägermaterials mit dem Kleber B und
e) UV-Bestrahlung des Verbundes auf die offene Seite der Klebmasse B mit einer Oberflächendosis B.

Bei der ersten Bestrahlung können die Beschleunigungsspannung und die Einstelldosis für die Elektronenstrahlen und bei der zweiten Bestrahlung die Eindringtiefe der UV-Strahlung durch die Auswahl eines Fotoinitiators mit geeigneter Wellenlänge so gewählt werden, daß sich in der Klebemasse A ein annähernd konstantes Vernetzungsprofil zum Träger hin ausbildet.

Diese Ausführungsform bietet auch Vorteile bei ES-degradierbaren Trägern, die hier deutlich weniger belastet werden als bei zweiseitiger ES-Vernetzung. Zusätzlich erhält der Releaseliner keine ES-Dosis.

Beim zweiten Vernetzungsdurchgang mit UV-Strahlen nimmt die absorbierte UV-Dosis in dem Kleber B mit der Tiefe zum Träger hin annähernd in einer Exponentialfunktion ab. Weiterhin durchdringt sie einen UV-durchlässigen Träger, um dann in den Kleber A einzudringen, wobei hierin wiederum ein annähernd exponentieller Abfall der UV-Dosis vom Träger zum Releaseliner hin stattfindet.

Beim ersten Vernetzungsdurchgang mit ES werden die Einstelldosis A und die Beschleunigungsspannung A dabei so gewählt, daß im Kleber A nach dem zweiten Vernetzungsdurchgang mit UV-Strahlen eine annähernd gleichmäßige Vernetzung über die Tiefe, und zwar durch einen entgegengesetzten ES-Dosisgradienten, erreicht wird oder daß gezielte Vernetzungsprofile erzeugt werden.

Bei exakt bekannter Abnahme der UV-Dosis mit der Tiefe in den Klebern und im Träger kann die Optimierung der Parameter rein rechnerisch erfolgen. Ansonsten ist eine experimentelle Optimierung insbesondere der Beschleunigungsspannung A vorteilhaft.

In einer zweiten alternativen bevorzugten Ausführungsform besteht das Verfahren zur strahlenchemischen Vernetzung von doppelseitigen Klebebändern aus den Verfahrensschritten:

a) Beschichten eines Trägers mit einem Kleber A, der sowohl UV- wie auch ES-vernetzbar sein kann,
b) UV-Bestrahlung des mit dem Kleber A versehenen Trägers in einer Bestrahlungsvorrichtung mit einer Oberflächendosis A, wobei der Kleber A sowohl UV- wie ES-vernetzbar sein kann,
c) Eindecken des Klebers A mit einem Releaseliner,
d) Beschichten der zweiten Seite des Trägermaterials mit dem Kleber B und
e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird.

In dem Kleber A nimmt die absorbierte UV-Dosis mit der Tiefe zum Träger hin annähernd in einer Exponentialfunktion ab, wobei die Stärke der Abnahme im gewünschten Wellenlängenbereich von unterschiedlichen Faktoren abhängt. Ab einer gewissen Schichtdicke kommt es also zu einer Untervernetzung des Klebers zum Träger hin. Dieses wird durch einen entgegengesetzten ES-Dosisgradienten aus der ES-Bestrahlung im folgenden Durchgang kompensiert.

Die Einstelldosis B und die Beschleunigungsspannung B werden dabei so gewählt, daß die in der ersten vorteilhaften Ausführungsform genannten Dosisbereiche für den Kleber B und für den Releaseliner eingehalten werden. Bei exakt bekannter Abnahme der UV-Dosis mit der Tiefe kann die Optimierung der Parameter rein rechnerisch erfolgen. Ansonsten ist eine experimentelle Optimierung (insbesondere der Beschleunigungsspannung B) vorteilhaft.

In einer dritten alternativen bevorzugten Ausführungsform besteht das Verfahren zur strahlenchemischen Vernetzung von doppelseitigen Klebebändern aus den Verfahrensschritten:

a) Beschichten eines Releaseliners mit einem Kleber A,
b) ES-Vernetzung des Teilproduktes Kleber A/Releaseliner auf der Masseseite mit einer an der ES-Anlage eingestellten Dosis A und Beschleunigungsspannung A,
c) Eindecken des Klebers A mit einem Trägermaterial,
d) Beschichten der zweiten Seite des Trägermaterials mit dem Kleber B und
e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird und wobei die Dosis A und die Dosis B und/oder die Beschleunigungsspannung A und die Beschleunigungsspannung B unterschiedliche Werte aufweisen.

In einer vierten alternativen bevorzugten Ausführungsform besteht das Verfahren zur strahlenchemischen Vernetzung von doppelseitigen Klebebändern aus den Verfahrensschritten:

a) Beschichten eines Releaseliners mit einem Kleber A,
b) UV-Bestrahlung des mit dem Kleber A versehenen Releaseliners in einer Bestrahlungsvorrichtung mit einer Oberflächendosis A, wobei der Kleber A sowohl UV- wie ES-vernetzbar sein kann,
c) Eindecken des Klebers A mit einem Trägermaterial,
d) Beschichten der zweiten Seite des Trägermaterials mit dem Kleber B und
e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird und wobei die Oberflächendosis A und die Dosis B unterschiedliche Werte aufweisen.

Bei der ersten Bestrahlung können die Eindringtiefe der UV-Strahlung durch die Auswahl eines Fotoinitiators mit geeigneter Wellenlänge und bei der zweiten Bestrahlung die Beschleunigungsspannung B und die Einstelldosis B für die Elektronenstrahlen so gewählt werden, daß sich in der Klebemasse A ein annähernd konstantes Vernetzungsprofil zum Träger hin ausbildet, mit dem Klebeeigenschaften gezielt beeinflußt werden.

Des weiteren können bei der ersten Bestrahlung die Eindringtiefe der UV-Strahlung durch die Auswahl eines Fotoinitiators mit geeigneter Wellenlänge und bei der zweiten Bestrahlung die Beschleunigungsspannung B und die Einstelldosis B für die Elektronenstrahlen so gewählt werden, daß sich in der Klebemasse A ein fallendes oder steigendes Vernetzungsprofil zum Träger hin ausbildet, mit dem Klebeeigenschaften gezielt beeinflußt werden.

Im folgenden sollen erfindungsgemäße Verfahren anhand von mehreren Beispielen erläutert werden, ohne diese damit allerdings unnötig einschränken zu wollen.

**Beispiel 1**

Ein doppelseitiges Klebeband wird in den Arbeitsschritten

a) Beschichtung eines Trägers mit einer ersten Masseschicht,
b) Elektronenstrahlvernetzung des Teilproduktes,
c) Eindecken eines Releaseliners,
d) Beschichtung des Trägers mit der zweiten Masseschicht und
e) Elektronenstrahlvernetzung des Verbundes gefertigt.

Die benutzten Elektronenstrahlanlagen haben ein zu durchstrahlendes Flächengewicht zwischen Hochvakuum und Produkt von 124 g/m$^2$.

Die Stärken der Einzelschichten des Produktes betragen:

- MOPP-Träger 45 g/m$^2$
- erste Masseschicht 100 g/m$^2$ Acrylat
- Releaseliner 80 g/m$^2$ und

- zweite Masseschicht 100 g/m$^2$ Acrylat

Die Acrylatklebemassen entsprechen solchen, wie sie zum Beispiel in der DE 39 42 232 oder der DE 43 13 008 beschrieben worden sind.

Bei einer Beschleunigungsspannung von 150 kV und einer Einstelldosis von 67 kGy für den ersten Vernetzungsschritt sowie einer Beschleunigungsspannung von 183 kV und einer Einstelldosis von 88 kGy für den zweiten Vernetzungsschritt ergibt sich eine Gesamtdosis in den beiden Masseschichten innerhalb von 80 ± 9 kGy (siehe anschließende Graphik).

Der Releaseliner erhält weniger als 10 kGy auf der Seite zur ersten Masseschicht und weniger als 2 kGy auf der offenen Seite. Es werden nur mäßig erhöhte Abrollkräfte und Abzugskräfte und kein Rupfen durch Schädigung des Releaseliners festgestellt.

Die Bestimmung der Abrollkraft ist angelehnt an die AFERA 4013 / DIN E 1944, die Abzugskraft entspricht der Trennkraft nach FT M3 von Finat, und zwar ohne Temperaturlagerung.

Die Klebeeigenschaften entsprechen denen einer alternativen Fertigung, bei der der Gesamtverbund nach der Beschichtung beider Seiten nur einmal mit einer Einstelldosis von 80 kGy bei einer Beschleunigungsspannung von 250 kV bestrahlt wird. Die Abrollkräfte und die Abzugskräfte steigen hier jedoch so drastisch, daß der Releaseliner kurz nach der Elektronenstrahlvernetzung ausgetauscht werden muß.

Bei einer Reduzierung der Beschleunigungsspannung auf 210 kV ist einerseits die Dosis in der ersten Masseschicht bereits für eine ausreichende Belastbarkeit des Klebebandes auf Scherkräfte zu niedrig, andererseits ist die Dosisreduzierung im Releaseliner noch nicht ausreichend, um unzulässige Schädigungen des Releaseliners zu vermeiden.

**Beispiel 2**

Die Herstellungsschritte des Klebebands entsprechen denjenigen aus Beispiel 1.

Die benutzten Elektronenstrahlanlagen haben ein zu durchstrahlendes Flächengewicht zwischen Hochvakuum und Produkt von 76 g/m$^2$.

Die Stärken der Einzelschichten des Produktes betragen:

- Cellulosevlies-Träger 13 g/m$^2$
- erste Masseschicht 45 g/m$^2$ Acrylat
- Releaseliner 60 g/m$^2$ und
- zweite Masseschicht 35 g/m$^2$ Acrylat

Bei einer Beschleunigungsspannung von 97 kV und einer Einstelldosis von 67 kGy für den ersten Vernetzungsschritt sowie einer Beschleunigungsspannung von 114 kV und einer Einstelldosis von 90 kGy für den zweiten Vernetzungsschritt ergibt sich eine Gesamtdosis in den beiden Masseschichten innerhalb von 80 ± 10 kGy (siehe anschließende Graphik).

Der Releaseliner erhält weniger als 12 kGy auf der Seite zur ersten Masseschicht und weniger als 1 kGy auf der offenen Seite.

Die Klebeeigenschaften entsprechen wieder denen einer Herstellung mit einseitiger homogener Durchstrahlung mit Solldosis. Eine ausreichende Reduzierung der Dosis im Releaseliner zur Vermeidung der Schädigung konnte auch hier wegen zu geringer Dosis in der Masseschicht A nicht realisiert werden.

**Beispiel 3**

Ein doppelseitiges Klebeband wird in den Arbeitsschritten

a) Beschichtung eines Releaseliners mit einer ersten Masseschicht,
b) Elektronenstrahlvernetzung der ersten Masseschicht auf dem Releaseliner,
c) Eindecken des Trägers,
d) Beschichtung des Verbundes auf der Trägerseite mit der zweiten Masseschicht und
e) Elektronenstrahlvernetzung des Verbundes gefertigt.

Die benutzten Elektronenstrahlanlagen haben ein zu durchstrahlendes Flächengewicht zwischen Hochvakuum und Produkt von 122 g/m$^2$.

Die Stärken der Einzelschichten des Produktes betragen:

- Cellulosevlies-Träger 8,5 g/m$^2$
- erste Masseschicht 65 g/m$^2$ Acrylat
- Releaseliner 130 g/m$^2$ und
- zweite Masseschicht 60 g/m$^2$ Acrylat

Bei einer Beschleunigungsspannung von 164 kV und einer Einstelldosis von 14 kGy für den ersten Vernetzungsschritt sowie einer Beschleunigungsspannung von 178 kV und einer Einstelldosis von 63 kGy für den zweiten Vernetzungsschritt ergibt sich eine Gesamtdosis in den beiden Masseschichten innerhalb von 60 ± 11 kGy (siehe anschließende Graphik).

Der Releaseliner erhält weniger als 50 kGy auf der Seite zur ersten Masseschicht und weniger als 5 kGy auf der offenen Seite. Es wird kein Rupfen durch Schädigung des Releaseliners festgestellt. Die Erhöhung der Abrollkräfte und Abzugskräfte bewegt sich im tolerierbaren Bereich.

Die Klebeeigenschaften entsprechen denen einer alternativen Fertigung, bei der der Gesamtverbund nach der Beschichtung beider Seiten nur einmal mit einer Einstelldosis von 60 kGy bei einer Beschleunigungsspannung von 205 kV bestrahlt wird. Die Abrollkräfte steigen hier jedoch so drastisch, daß der Releaseliner kurz nach der Elektronenstrahlvernetzung ausgetauscht werden muß.

Bei einer Reduzierung der Strahlenbelastung der offenen Seite des Releaseliners auf das Niveau dieses Beispiels durch eine kleinere Beschleunigungsspannung von 180 kV ist die Dosis in der ersten Masseschicht bereits für eine ausreichende Belastbarkeit des Klebebandes auf Scherkräfte zu niedrig während die Abrollkräfte dem Beispiel entsprechen.

**Beispiel 4**

Die Herstellungsschritte des Klebebands, der Produktaufbau und die Elektronenstrahlanlage entsprechen denjenigen aus Beispiel 1, jedoch benötigt die zweite Masseschicht nur eine ES-Dosis von 50 kGy.

Bei einer Beschleunigungsspannung von 164 kV und einer Einstelldosis von 67 kGy für den ersten Vernetzungsschritt und einer Beschleunigungsspannung von 190 kV sowie einer Einstelldosis von 54 kGy für den zweiten Vernetzungsschritt ergibt sich eine Gesamtdosis in der ersten Masseschicht von $80 \pm 4$ kGy und eine Gesamtdosis in der zweiten Masseschicht von $50 \pm 4$ kGy (siehe anschließende Graphik).

Der Releaseliner erhält weniger als 12 kGy auf der Seite zur ersten Masseschicht und weniger als 2 kGy auf der offenen Seite.

Die Klebeeigenschaften entsprechend den geforderten Werten.

Dieses Produkt ist auf Grund der unterschiedlichen Gesamtdosen in den Klebeschichten mit einseitiger Durchstrahlung nicht herstellbar; ebenso nicht mit symmetrischer zweiseitiger Bestrahlung.

**Beispiel 5**

Ein doppelseitiges Klebeband wird in den Arbeitsschritten

a) Beschichtung eines Trägers mit einer ersten Masseschicht,
b) UV-Vernetzung des Teilproduktes,
c) Eindecken eines Releaseliners,
d) Beschichtung des Trägers mit der zweiten Masseschicht und
e) Elektronenstrahlvernetzung des Verbundes gefertigt.

Die benutzte Elektronenstrahlanlage hat ein zu durchstrahlendes Flächengewicht zwischen Hochvakuum und Produkt von 76 g/m$^2$.

Die Stärken der Einzelschichten des Produktes betragen:

- PP-Träger 28 $\mu$m
- erste Masseschicht 70 g/m$^2$ Acrylat
- Releaseliner 80 g/m$^2$ und
- zweite Masseschicht 70 g/m$^2$ Acrylat

Die erste Masseschicht ist sowohl UV- wie auch Elektronenstrahl-vernetzbar. Sie wird mit Hilfe von Quecksilbermitteldruck-UV-Strahlern oder UVC-Niederdruckstrahlern bei einer UVC-Oberflächendosis von 75 mJ/cm$^2$ für den mit 0,5 Gewichtsprozenten einpolymerisierten Fotoinitiator Benzoinacrylat vernetzt. Die UVC-Intensität halbiert sich bei der eingesetzten ersten Klebemasse in etwa alle 25 g/m$^2$ mit der Tiefe, wobei diese Halbwertstiefe von verschiedenen Faktoren beeinflußt wird.

Für die Elektronenstrahlvernetzung ergibt sich bei einer Beschleunigungsspannung von 145 kV und einer Einstelldosis von 87 kGy für den zweiten Vemetzungsschritt in der zweiten Masseschicht eine Dosis innerhalb von 80 ± 7 kGy.

Der Releaseliner erhält dabei weniger als 12 kGy auf der Seite zur ersten Masseschicht und weniger als 1 kGy auf der offenen Seite. Es werden nur mäßig erhöhte Abrollkräfte und Abzugskräfte und kein Rupfen durch Schädigung des Releaseliners festgestellt.

Die erste Masseschicht erhält zusätzlich zur UVC-Dosis auch einen Anteil der Elektronenstrahl-Dosis, wodurch der für eine Masserezeptur vorgegebene UVC-Dosisgradient in der ersten Klebeschicht durch einen entgegengesetzten ES-Gradienten ausgeglichen und eine ausreichend konstante Vernetzung erreicht wird.

Ohne die Elektronenstrahlvernetzung auf die zweite Masseseite ist die Kohäsion der ersten Masseschicht nicht ausreichend zum Erreichen der geforderten Scherbelastbarkeit des Produktes.

**Beispiel 6**

Ein doppelseitiges Klebeband wird in den Arbeitsschritten

a) Beschichtung eines Trägers mit einer ersten Masseschicht,
b) ES-Vernetzung des Teilproduktes,
c) Eindecken eines Releaseliners,
d) Beschichtung des Trägers mit der zweiten Masseschicht und
e) UV-Vernetzung des Verbundes gefertigt.

Die erste Masseschicht ist sowohl UV- wie auch Elektronenstrahl-vernetzbar.
Die benutzte Elektronenstrahlanlage hat ein zu durchstrahlendes Flächengewicht zwischen Hochvakuum und Produkt von 76 g/m$^2$.
Die Stärken der Einzelschichten des Produktes betragen:

- PTE-Träger 12 g/m$^2$
- erste Masseschicht 60 g/m$^2$ Acrylat
- Releaseliner 80 g/m$^2$ und
- zweite Masseschicht 30 g/m$^2$ Acrylat

Der erste Vernetzungsschritt erfolgt bei einer Beschleunigungsspannung von 122 kV und einer Einstelldosis von 75 kGy. Der zweite Vernetzungsschritt erfolgt mit Hilfe von Quecksilbermitteldruck-UV-Strahlern oder UVC-Niederdruckstrahlern bei einer UVC-Dosis von 75 mJ/cm$^2$ für den einpolymerisierten Fotoinitiator Benzoinacrylat.
Die erste Masseschicht erhält zusätzlich zur eingestellten ES-Dosis einen Anteil der eingestellten UVC-Dosis.
Die Dosisabnahme mit der Tiefe im Produkt ist für UV-Strahlung vom chemischen System und der Wellenlänge abhängig und kann bei einem gegebenen Fotoinitiator nur wenig ohne Nebenwirkungen beeinflußt werden. Die resultierende Vernetzung aus ES-Dosis und UV-Dosis über die Tiefe in der ersten Masseschicht wird über die Beschleunigungsspannung und die eingestellte ES-Dosis auf optimale Klebeeigenschaften der ersten Masseschicht eingestellt. Der Releaseliner wird praktisch nicht belastet. Es werden keine erhöhten Abrollkräfte und Abzugskräfte und kein Rupfen durch Schädigung des Releaseliners festgestellt.

**Patentansprüche**

1. Verfahren zur strahlenchemischen Vernetzung von doppelseitigen Klebebändern, wobei ein beidseitig mit Klebern beschichtetes Trägermaterial in einer Bestrahlungsvorrichtung von beiden Seiten mit unterschiedlichen Dosen asymmetrisch bestrahlt wird.

2. Verfahren zur strahlenchemischen Vernetzung von doppelseitigen Klebebändern nach Anspruch 1, bestehend aus den Verfahrensschritten:

a) Beschichten eines Trägermaterials mit einem Kleber A,
b) ES-Vernetzung des Teilproduktes Kleber A/Träger auf der Masseseite mit einer an der ES-Anlage eingestellten Dosis A und Beschleunigungsspannung A,
c) Eindecken des Klebers A mit einem Releaseliner,
d) Beschichten der zweiten Seite des Trägermaterials mit dem Kleber B und
e) ES-Bestrahlung des Verbundes auf die offene Seite der Klebmasse B mit einer an der ES-Anlage eingestellten Dosis B und Beschleunigungsspannung B, wobei Dosis A und Dosis B und/oder Beschleunigungsspannung A und Beschleunigungsspannung B unterschiedliche Werte aufweisen.

3. Verfahren zur strahlenchemischen Vernetzung von doppelseitigen Klebebändern nach Anspruch 1, bestehend aus den Verfahrensschritten:

a) Beschichten eines Trägermaterials mit einem Kleber A,
b) ES-Vernetzung des Teilproduktes Kleber A/Träger auf der Masseseite mit einer an der ES-Anlage eingestellten Dosis A und Beschleunigungsspannung A, wobei der Kleber A sowohl UV- wie ES-vernetzbar sein kann,

c) Eindecken des Klebers A mit einem Releaseliner,

d) Beschichten der zweiten Seite des Trägermaterials mit dem Kleber B und

e) UV-Bestrahlung des Verbundes auf die offene Seite der Klebmasse B mit einer Oberflächendosis B.

4. Verfahren zur strahlenchemischen Vernetzung von doppelseitigen Klebebändern nach Anspruch 1, bestehend aus den Verfahrensschritten:

a) Beschichten eines Trägermaterials mit einem Kleber A,

b) UV-Bestrahlung des mit dem Kleber A versehenen Trägers in einer Bestrahlungsvorrichtung mit einer Oberflächendosis A, wobei der Kleber A sowohl UVwie ES-vernetzbar sein kann,

c) Eindecken des Klebers A mit einem Releaseliner,

d) Beschichten der zweiten Seite des Trägermaterials mit dem Kleber B und

e) ES-Bestrahlung des Verbundes auf die offene Seite der Klebmasse B mit einer an der ES-Anlage eingestellten Dosis B und Beschleunigungsspannung B.

5. Verfahren zur strahlenchemischen Vernetzung von doppelseitigen Klebebändern nach Anspruch 1, bestehend aus den Verfahrensschritten:

a) Beschichten eines Releaseliners mit einem Kleber A,

b) ES-Vernetzung des Teilproduktes Kleber A/Releaseliner auf der Masseseite mit einer an der ES-Anlage eingestellten Dosis A und Beschleunigungsspannung A,

c) Eindecken des Klebers A mit einem Trägermaterial,

d) Beschichten der zweiten Seite des Trägermaterials mit dem Kleber B und

e) ES-Bestrahlung des Verbundes auf die offene Seite der Klebmasse B mit einer an der ES-Anlage eingestellten Dosis B und Beschleunigungsspannung B, wobei Dosis A und Dosis B und/oder Beschleunigungsspannung A und Beschleunigungsspannung B unterschiedliche Werte aufweisen.

6. Verfahren zur strahlenchemischen Vernetzung von doppelseitigen Klebebändern nach Anspruch 1, bestehend aus den Verfahrensschritten:

a) Beschichten eines Releaseliners mit einem Kleber A,

b) UV-Bestrahlung des mit dem Kleber A versehenen Releaseliners in einer Bestrahlungsvorrichtung mit einer Oberflächendosis A, wobei der Kleber A sowohl UV- wie ES-vernetzbar sein kann,

c) Eindecken des Klebers A mit einem Trägermaterial,

d) Beschichten der zweiten Seite des Trägermaterials mit dem Kleber B und

e) ES-Bestrahlung des Verbundes auf die offene Seite der Klebmasse B mit einer an der ES-Anlage eingestellten Dosis B und Beschleunigungsspannung B.

7. Verfahren nach den Ansprüchen 1 bis 6, **dadurch gekennzeichnet, daß** die Seite mit dem Releaseliner auf einer Kühlwalze durch die Elektronenbestrahlung geführt wird.

8. Verfahren nach den Ansprüchen 1 bis 7, **dadurch gekennzeichnet, daß** bei der ersten Bestrahlung die Beschleunigungsspannung und die Strahlendosis so gewählt werden, daß die Gesamtstrahlendosis in der Klebemasse A unter Einbeziehung der Strahlendosis aus der zweiten Bestrahlung nicht mehr als $\pm$ 30 %, vorzugsweise nicht mehr als $\pm$ 10 %, vom Sollwert abweicht.

9. Verfahren nach den Ansprüchen 1 bis 8, **dadurch gekennzeichnet, daß** bei der zweiten Bestrahlung die Beschleunigungsspannung und die Strahlendosis so gewählt werden, daß einerseits die Strahlendosis in der Grenzschicht zwischen Releaseliner und der Klebmasse A 50 kGy, vorzugsweise 12 bis 15 kGy, nicht übersteigt und auch die Dosis auf der offenen Seite 40 kGy, vorzugsweise 10 kGy nicht übersteigt, während andererseits der Dosisabfall in der Klebmasse B zum Träger hin 45 %, vorzugsweise 25 %, der Solldosis nicht übersteigt.

10. Verfahren nach den Ansprüchen 1 bis 9, **dadurch gekennzeichnet, daß** bei der ersten und zweiten Bestrahlung die Beschleunigungsspannungen und die Einstelldosen so gewählt werden, daß sich in der Klebemasse A ein fallendes oder steigendes Tiefendosisprofil zum Träger hin ausbildet, mit dem Klebeeigenschaften gezielt beeinflußt werden.

**11.** Verfahren nach den Ansprüchen 1 und 10, **dadurch gekennzeichnet, daß** bei der ersten Bestrahlung die Eindringtiefe der UV-Strahlung durch die Auswahl eines Fotoinitiators mit geeigneter Wellenlänge und bei der zweiten Bestrahlung die Beschleunigungsspannungen und die Einstelldosen für die Elektronenstrahlen so gewählt werden, daß sich in der Klebemasse A ein annähernd konstantes Vernetzungsprofil zum Träger hin ausbildet, mit dem Klebeeigenschaften gezielt beeinflußt werden.

**12.** Verfahren nach den Ansprüchen 1 und 4, **dadurch gekennzeichnet, daß** bei der ersten Bestrahlung die Eindringtiefe der UV-Strahlung, durch die Auswahl eines Fotoinitiators mit geeigneter Wellenlänge und bei der zweiten Bestrahlung die Beschleunigungsspannungen und die Einstelldosen für die Elektronenstrahlen so gewählt werden, daß sich in der Klebemasse A ein fallendes oder steigendes Vernetzungsprofil zum Träger hin ausbildet, mit dem Klebeeigenschaften gezielt beeinflußt werden.

**13.** Verfahren nach den Ansprüchen 1 und 12, **dadurch gekennzeichnet, daß** bei der ersten Bestrahlung die Beschleunigungsspannung und die Einstelldosis für die Elektronenstrahlen und bei der zweiten Bestrahlung über die Eindringtiefe der UV-Strahlung durch die Auswahl eines Fotoinitiators mit geeigneter Wellenlänge so gewählt werden, daß sich in der Klebemasse A annähernd konstantes Vernetzungsprofil zum Träger hin ausbildet.

**14.** Verfahren nach den Ansprüchen 1 bis 13, **dadurch gekennzeichnet, daß** die resultierenden Strahlendosen in den Klebemassen bis zu 80 kGy und mehr betragen können und ES-Beschleunigungsspannungen von 40 bis 350 kV gewählt werden können.

**15.** Verfahren nach den Ansprüchen 1 bis 14, **dadurch gekennzeichnet, daß** als Klebmassen eingesetzt werden Acrylate und Kautschuke aus Lösung, aus Dispersion oder Hotmelt-Klebemassen.

**16.** Verfahren nach den Ansprüchen 1 bis 15, **dadurch gekennzeichnet, daß** die Klebmassen gefüllt, gefärbt und/ oder geschäumt sind.

**17.** Verfahren nach den Ansprüchen 1 bis 16, **dadurch gekennzeichnet, daß** als Trägermaterialien solche aus MOPP, BOPP, HDPE, LDPE, Polyester, PVC, Papier, Vliese oder Schäume eingesetzt werden.

**18.** Verfahren zur strahlenchemischen Vernetzung von doppelseitig beschichteten Trägermaterialien, wobei ein beidseitig beschichtetes Trägermaterial in einer Bestrahlungsvorrichtung von beiden Seiten mit unterschiedlichen Dosen asymmetrisch bestrahlt wird.

**Claims**

**1.** Process for the radiation crosslinking of double-sided adhesive tapes, in which a backing material coated on both sides with adhesives is irradiated asymmetrically from both sides with different doses in an irradiation means.

**2.** Process for the radiation crosslinking of double-sided adhesive tapes according to Claim 1, consisting of the following steps:

a) coating a backing material with an adhesive A,
b) EB-crosslinking the adhesive A/backing subunit on the composition side with a dose A and acceleration voltage A set on the EB unit,
c) lining the adhesive A with a release liner,
d) coating the second side of the backing material with the adhesive B, and
e) EB-irradiating the assembly on the exposed side of the adhesive composition B with a dose B and acceleration voltage B set on the EB unit,
the dose A and the dose B and/or the acceleration voltage A and the acceleration voltage B having different values.

**3.** Process for the radiation crosslinking of double-sided adhesive tapes according to Claim 1, consisting of the following steps:

a) coating a backing material with an adhesive A,
b) EB-crosslinking the adhesive A/backing subunit on the composition side with a dose A and the acceleration voltage A set on the EB unit, it being possible for the adhesive A to be both UV- and EB-crosslinkable,

c) lining the adhesive A with a release liner,

d) coating the second side of the backing material with the adhesive B, and

e) UV-irradiating the assembly on the exposed side of the adhesive composition B with a surface dose B.

4. Process for the radiation crosslinking of double-sided adhesive tapes according to Claim 1, consisting of the following steps:

a) coating a backing material with an adhesive A,

b) UV-irradiating the backing, provided with the adhesive A, with a surface dose A in an irradiation means, it being possible for the adhesive A to be both UV- and EB-crosslinkable,

c) lining the adhesive A with a release liner,

d) coating the second side of the backing material with the adhesive B, and

e) EB-irradiating the assembly on the exposed side of the adhesive composition B with a dose B and acceleration voltage B set on the EB unit.

5. Process for the radiation crosslinking of double-sided adhesive tapes according to Claim 1, consisting of the following steps:

a) coating a release liner with an adhesive A,

b) EB-crosslinking the adhesive A/release liner subunit on the composition side with a dose A and acceleration voltage A set on the EB unit,

c) lining the adhesive A with a backing material,

d) coating the second side of the backing material with the adhesive B, and

e) EB-irradiating the assembly on the exposed side of the adhesive composition B with a dose B and acceleration voltage B set on the EB unit,

the dose A and the dose B and/or the acceleration voltage A and the acceleration voltage B having different values.

6. Process for the radiation crosslinking of double-sided adhesive tapes according to Claim 1, consisting of the following steps:

a) coating a release liner with an adhesive A,

b) UV-irradiating the release liner, provided with the adhesive A, with a surface dose A in an irradiation means, it being possible for the adhesive A to be both UV- and EB-crosslinkable,

c) lining the adhesive A with a backing material,

d) coating the second side of the backing material with the adhesive B, and

e) EB-irradiating the assembly on the exposed side of the adhesive composition B with a dose B and acceleration voltage B set on the EB unit.

7. Process according to Claims 1 to 6, **characterized in that** the side with the release liner is guided on a cooling roll through the electron beam unit.

8. Process according to Claims 1 to 7, **characterized in that**, in the first irradiation, the acceleration voltage and the radiation dose are chosen such that the total radiation dose in the adhesive composition A, including the radiation dose from the second irradiation, deviates by not more than $\pm30\%$, preferably not more than $\pm10\%$, from the target value.

9. Process according to Claims 1 to 8, **characterized in that**, in the second irradiation, the acceleration voltage and the radiation dose are chosen so that, on the one hand, the radiation dose at the interface between release liner and the adhesive composition A does not exceed 50 kGy, preferably from 12 to 15 kGy, and the dose on the open side does not exceed 40 kGy, preferably 10 kGy, while on the other hand the dose reduction in the adhesive composition B towards the backing does not exceed 45%, preferably 25%, of the target dose.

10. Process according to Claims 1 to 9, **characterized in that**, in the first and second irradiation, the acceleration voltages and the set doses are chosen so that in the adhesive composition A an ascending or descending depth/dose profile towards the backing is formed, with which adhesive properties are influenced in a controlled manner.

**11.** Process according to Claims 1 and 10, **characterized in that**, in the first irradiation, the penetration depth of the UV radiation is chosen, through the selection of a photoinitiator with an appropriate wavelength, and in the second irradiation, the acceleration voltages and the set doses for the electron beams are chosen such that in the adhesive composition A an approximately constant profile of crosslinking towards the backing is formed, with which adhesion properties are influenced in a controlled manner.

**12.** Process according to Claims 1 and 4, **characterized in that**, in the first irradiation, the penetration depth of the UV radiation is chosen, through the selection of a photoinitiator with an appropriate wavelength, and in the second irradiation, the acceleration voltages and the set doses for the electron beams are chosen such that in the adhesive composition A an ascending or descending profile of crosslinking towards the backing is formed, with which adhesion properties are influenced in a controlled manner.

**13.** Process according to Claims 1 and 12, **characterized in that**, in the first irradiation, the acceleration voltage and the set dose for the electron beams, and in the second irradiation the penetration depth of the UV radiation, through the selection of a photoinitiator with an appropriate wavelength, are chosen such that in the adhesive composition A an approximately constant profile of crosslinking towards the backing is formed.

**14.** Process according to Claims 1 to 13, **characterized in that** the resulting radiation doses in the adhesive compositions can be up to 80 kGy or more and it is possible to choose EB acceleration voltages of from 40 to 350 kV.

**15.** Process according to Claims 1 to 14, **characterized in that** the adhesive compositions employed are acrylates and rubbers, which are used from solution or from dispersion, or hot-melt adhesive compositions.

**16.** Process according to Claims 1 to 15, **characterized in that** the adhesive compositions are filled, coloured and/or foamed.

**17.** Process according to Claims 1 to 16, **characterized in that** the backing materials employed are those made of MOPP, BOPP, HDPE, LDPE, polyester, PVC, paper, nonwovens or foams.

**18.** Process for the radiation crosslinking of double-sidedly coated backing materials, in which a double-sidedly coated backing material is irradiated asymmetrically from both sides with different doses in an irradiation means.

**Revendications**

**1.** Procédé pour la réticulation par chimie de rayonnement de bandes adhésives double face, un matériau support revêtu des deux côtés avec des adhésifs étant exposé asymétriquement des deux côtés à des doses différentes dans un dispositif d'exposition.

**2.** Procédé pour la réticulation par chimie de rayonnement de bandes adhésives double face selon la revendication 1, composé des étapes de procédé suivantes :

a) revêtement d'un matériau support avec un adhésif A,
b) réticulation par rayons électroniques d'un produit partiel adhésif A/support sur le côté substance avec une dose A et une tension d'accélération A réglées sur l'installation à rayons électroniques,
c) recouvrement de l'adhésif A avec un release liner,
d) revêtement du deuxième côté du matériau support avec un adhésif B et
e) exposition aux rayons électroniques du composite sur le côté ouvert de la substance adhésive B avec une dose B et avec une tension d'accélération B réglées sur l'installation à rayons électroniques, la dose A et la dose B et/ou la tension d'accélération A et la tension d'accélération B présentant des valeurs différentes.

**3.** Procédé pour la réticulation par chimie de rayonnement de bandes adhésives double face selon la revendication 1, composé des étapes de procédé suivantes :

a) revêtement d'un matériau support avec un adhésif A,
b) réticulation par rayons électroniques du produit partiel adhésif A/support sur le côté substance avec une dose A et une tension d'accélération A réglées sur l'installation à rayons électroniques, l'adhésif A étant aussi bien réticulable par rayons UV que par rayons électroniques,

c) recouvrement de l'adhésif A avec un release liner,

d) revêtement du deuxième côté du matériau support avec un adhésif B et

e) exposition aux rayons UV du composite sur le côté ouvert de la substance adhésive B avec une dose de surface B.

4. Procédé pour la réticulation par chimie de rayonnement de bandes adhésives double face selon la revendication 1, composé des étapes de procédé suivantes :

a) revêtement d'un matériau support avec un adhésif A,

b) réticulation par rayons UV du support pourvu de l'adhésif A dans un dispositif d'exposition avec une dose de surface A, l'adhésif A étant aussi bien réticulable par rayons UV que par rayons électroniques,

c) recouvrement de l'adhésif A avec un release liner,

d) revêtement du deuxième côté du matériau support avec l'adhésif B et

e) exposition aux rayons électroniques du composite sur le côté ouvert de la substance adhésive B avec une dose B et une tension d'accélération B réglées sur l'installation à rayons électroniques.

5. Procédé pour la réticulation par chimie de rayonnement de bandes adhésives double face selon la revendication 1, composé des étapes de procédé suivantes :

a) revêtement d'un release liner avec un adhésif A,

b) réticulation par rayons électroniques du produit partiel adhésif A/release liner sur le côté substance avec une dose A et une tension d'accélération A réglées sur l'installation à rayons électroniques,

c) recouvrement de l'adhésif A avec un matériau support,

d) revêtement du deuxième côté du matériau support avec l'adhésif B et

e) exposition aux rayons électroniques du composite sur le côté ouvert de la substance adhésive B avec une dose B et une tension d'accélération B réglées sur l'installation à rayons électroniques, la dose A et la dose B et/ou la tension d'accélération A et la tension d'accélération B présentant des valeurs différentes.

6. Procédé pour la réticulation par chimie de rayonnement de bandes adhésives double face selon la revendication 1, composé des étapes de procédé suivantes :

a) revêtement d'un release liner avec un adhésif A,

b) exposition aux rayons UV du release liner pourvu de l'adhésif A dans un dispositif d'exposition avec une dose de surface A, l'adhésif A étant réticulable aussi bien par rayons UV que par rayons électroniques,

c) recouvrement de l'adhésif A avec un matériau support,

d) revêtement du deuxième côté du matériau support avec l'adhésif B et

e) exposition aux rayons électroniques du composite sur le côté ouvert de la substance adhésive B avec une dose B et une tension d'accélération B réglées sur l'installation à rayons électroniques.

7. Procédé selon les revendications 1 à 6, **caractérisé en ce que** le côté avec le release liner est guidé à travers le rayonnement électronique sur un cylindre de refroidissement.

8. Procédé selon les revendications 1 à 7, **caractérisé en ce que**, lors de la première exposition, la tension d'accélération et la dose de rayonnement sont sélectionnées de sorte que la dose de rayonnement totale dans la substance adhésive A ne dévie pas de la valeur de consigne de plus de $\pm$ 30 %, de préférence de plus de $\pm$ 10 %, en tenant compte de la dose de rayonnement de la deuxième exposition.

9. Procédé selon les revendications 1 à 8, **caractérisé en ce que**, lors de la deuxième exposition, la tension d'accélération et la dose de rayonnement sont sélectionnées de sorte que, d'un côté, la dose de rayonnement dans la couche limite entre le release liner et la substance adhésive A ne dépasse pas 50 kGy, de préférence de 12 à 15 kGy, et qu'également, la dose sur le côté ouvert ne dépasse pas 40 kGy, de préférence 10 kGy, alors que, d'un autre côté, la chute de dose dans la substance adhésive B vers le support ne dépasse pas 45 %, de préférence 25 % de la dose de consigne.

10. Procédé selon les revendications 1 à 9, **caractérisé en ce que**, lors de la première et de la deuxième exposition, les tensions d'accélération et les doses réglées sont sélectionnées de sorte qu'un profil de dose de profondeur diminuant ou augmentant vers le support se forme dans la substance adhésive A, permettant d'influencer de façon ciblée les propriétés d'adhésion.

**11.** Procédé selon les revendications 1 et 10, **caractérisé en ce qu'**on sélectionne lors de la première exposition la profondeur de pénétration du rayonnement UV en choisissant un photoinitiateur avec une longueur d'onde appropriée et, lors de la deuxième exposition, les tensions d'accélération et les doses réglées pour les rayons électroniques de sorte que la substance adhésive A forme un profil de réticulation à peu près constant vers le support, permettant d'influencer de manière ciblée les propriétés d'adhésion.

**12.** Procédé selon les revendications 1 et 4, **caractérisé en ce qu'**on sélectionne lors de la première exposition la profondeur de pénétration du rayonnement UV en choisissant un photoinitiateur avec une longueur d'onde appropriée et, lors de la deuxième exposition, les tensions d'accélération et les doses réglées pour les rayons électroniques de sorte que la substance adhésive A forme un profil de réticulation diminuant ou augmentant vers le support, permettant d'influencer de manière ciblée les propriétés d'adhésion.

**13.** Procédé selon les revendications 1 et 12, **caractérisé en ce qu'**on sélectionne lors de là première exposition la tension d'accélération et la dose réglée pour les rayons électroniques et, lors de la deuxième exposition sur la profondeur de pénétration du rayonnement UV en choisissant un photoinitiateur avec une longueur d'onde appropriée de sorte que la substance adhésive A forme un profil de réticulation à peu près constant vers le support.

**14.** Procédé selon les revendications 1 à 13, **caractérisé en ce que** les doses de rayonnement résultant dans les substances adhésives peuvent aller jusqu'à 80 kGy et plus et que des tensions d'accélération des rayons électroniques de 40 à 350 kV peuvent être sélectionnées.

**15.** Procédé selon les revendications 1 à 14, **caractérisé en ce que** l'on utilise comme substances adhésives des acrylates et caoutchoucs de solution, dispersion ou substances adhésives hotmelt.

**16.** Procédé selon les revendications 1 à 15, **caractérisé en ce que** les substances adhésives sont chargées, colorées et/ou expansées.

**17.** Procédé selon les revendications 1 à 16, **caractérisé en ce qu'**en tant que matériaux supports, on utilise des matériaux en MOPP, BOPP, HDPE, LDPE, polyester, PVC, papier, des non-tissés ou mousses.

**18.** Procédé pour la réticulation par chimie de rayonnement de matériaux supports à revêtement double face, dans lequel un matériau support revêtu des deux côtés est exposé asymétriquement des deux côtés à des doses différentes dans un dispositif d'exposition.